**Europäisches Patentamt**

**European Patent Office**

**Office européen des brevets**

(19)

(11) Veröffentlichungsnummer : **0 106 935**
**B1**

# (12) EUROPÄISCHE PATENTSCHRIFT

(45) Veröffentlichungstag der Patentschrift :
**30.12.86**

(21) Anmeldenummer : **83102572.1**

(22) Anmeldetag : **16.03.83**

(51) Int. Cl.⁴ : **F 02 F 3/00**, F 16 J 1/14

(54) **Kolbentrieb für Hubkolben-Brennkraftmaschinen, wie Dieselmotoren u.a.**

(43) Veröffentlichungstag der Anmeldung :
**02.05.84 Patentblatt 84/18**

(45) Bekanntmachung des Hinweises auf die Patenterteilung : **30.12.86 Patentblatt 86/52**

(84) Benannte Vertragsstaaten :
**AT BE CH FR GB IT LI NL SE**

(56) Entgegenhaltungen :
**DE-A- 1 946 403**
**DE-A- 2 543 478**
**DE-A- 2 717 028**
**FR-A- 2 381 181**
**FR-A- 2 388 140**
**FR-A- 2 388 179**
**US-A- 4 180 027**
**BUSCHMANN, KOESSLER, "HANDBUCH DER KFZ-TECHNIK, Band 1, 1976, Wilhelm Heyne Verlag München**
**H. GROHE "OTTO UND DIESELMOTOREN", 5. Auflage, 1981, VOGEL VERLAG, WÜRZBURG**

(73) Patentinhaber : **Elsbett, Ludwig**
**Industriestrasse 14**
**D-8543 Hilpoltstein (DE)**

**Elsbett, Günter**
**Industriestrasse 14**
**D-8543 Hilpoltstein (DE)**

(72) Erfinder : **Elsbett, Ludwig**
**Industriestrasse 14**
**D-8543 Hilpoltstein (DE)**
Erfinder : **Elsbett, Günter**
**Industriestrasse 14**
**D-8543 Hilpoltstein (DE)**

EP 0 106 935 B1

**Beschreibung**

Die Erfindung bezieht sich auf einen Kolbentrieb für Hubkolben-Brennkraftmaschinen, wie Dieselmotoren u. a., bestehend aus einem in einem Zylinder axial verschiebbaren Kolben und einem diesen Kolben mit einem Kurbeltrieb verbindenden Pleuel, wobei der Kolben von einem dichtenden und einem führenden Abschnitt gebildet und diese Abschnitte zwischen sich ein freies axiales Spiel zueinander aufweisen sowie über einen Gelenkbolzen gelenkig miteinander verbunden sind, und von denen der dichtende Abschnitt von einem konzentrisch um eine Längsmittelachse des Kolbentriebs angeordneten und den Boden des Kolbens mit dessen Fuß verbindenden wie auch vom Fuß zum Boden sich radial ausweitenden Stützkörper gebildet wird, und dieser Stützkörper mit dem Boden in einen Dichtringe tragenden Ringträger über eine dort vorliegende Engstelle ausläuft, sowie der dichtende Abschnitt wie auch der führende Abschnitt nebst Pleuel symmetrisch zur Längsmittelachse Auflager für die gegenseitige Abstützung derselben über den Gelenkbolzen aufweisen.

Bei allen gängigen Hubkolben-Brennkraftmaschinen, so insbesondere bei den Dieselmotoren, wird der aus der Verbrennung von Kraftstoff-Luftgemischen entstehende Expansionsdruck mittels Kolbentrieben auf einen Kurbeltrieb übertragen, wobei der Verbrennungsablauf selbst eigenen Gesetzmäßigkeiten, so etwa direkte oder indirekte Einspritzung des Kraftstoffes in den Brennraum, folgen kann. Dabei ist bei allen gängigen dieselmotorischen Verbrennungsverfahren der Strahl des Kraftstoffes oder der Strahl eines bereits vor Erreichen eines Zylinderraumes gezündeten Gasgemisches gegen die Wand eines im Kolben vorgesehenen Brennraumes oder gegen den Boden des Kolbens gerichtet. Bei Anwendung von gut wärmeleitenden Materialien, wie beispielsweise Aluminium als Kolbenwerkstoff, sind vielfach örtliche Wärmerisse, zumindest aber erhebliche Wärmeverluste des Arbeitsgases die Folge, vor allem dann, wenn der Werkstoff des Kolbens viel Wärme an den Zylinder und von dort in das Kühlmittel der Brennkraftmaschine leitet. Diese vielfach als Unzulänglichkeit empfundene Bauweise bekannter Kolbentriebe hat insbesondere bei hochbelastbaren Kolbentrieben dazu geführt, daß die Kolben als gebauter Kolben, bestehend aus Stahl und Aluminium, konzipiert werden, die aber aufgrund ihres höheren Preises besonderen Anwendungsfällen vorbehalten bleiben. Durch diese Bauart können zwar die Vorteile einer höheren Belastbarkeit bei gleichzeitiger wärmedämmender Konzeption des Kolbens durch den Einsatz des Stahls als Kolbenwerkstoff und eine Gewichtsverminderung durch den Einsatz des Aluminiums erreicht werden, es gilt aber eine Bauart für Kolben, insbesondere für PKW zu finden, die ohne eine wesentliche Anhebung des Gewichts und der Kosten die Vorteile der hohen Standfestigkeit mit denen der Wärmedämmung wirtschaftlich vertretbar, verbindet.

Um diesen Erkenntnissen nach Standfestigkeit und Wärmedämmung einerseits und Gewichtsreduzierung andererseits Rechnung zu tragen, wurde ein Kolbentrieb dahingehend konzipiert, daß dieser von einem führenden und einem dichtenden Abschnitt gebildet wird, welche durch einen Gelenkbolzen an einem Pleuel gelenkig angeschlossen sind. Die Abschnitte, von denen der dichtende Abschnitt aus einem wärmedämmenden und der führende Abschnitt aus einem gute Gleiteigenschaften aufweisenden Werkstoff hergestellt sind, sind darüberhinaus durch ein freies Spiel voneinander getrennt, und es ist der dichtende Abschnitt mit einem Ringnuten für Dichtringe tragenden Ringträger versehen, welcher über eine Engstelle im Bereich des Kolbenbodens mit einem kegelförmigen Stützkörper und dem Kolbenboden verbunden ist. Der Stützkörper, der vom Kolbenboden zum Fuß des Kolbens ausläuft, kann in sich einen vorzugsweise ratationssymmetrischen Brennraum aufnehmen, der über die Engstelle, die ringförmig im Bereich des Kolbenbodens vorgesehen ist, gegen den Ringträger zusätzlich wärmegedämmt ist. Der Fuß des Kolbens ist gabelförmig ausgeführt, und es sind dessen Gabelarme symmetrisch zur Längsmittelachse des Kolbentriebes angeordnet sowie mit Lagerstellen für das Auflagern des Gelenkbolzens versehen. Analog der Anordnung der Lagerstellen an den Gabelarmen sind auch am führenden Abschnitt Lagerstellen für den Gelenkbolzen vorgesehen, und es sind weitere Lagerstellen für diesen Bolzen am Pleuelauge angebracht. Um einerseits die aus dem Brennraum in den Fuß des Kolbens fließende Wärme aus der Kraftstoff-Luftverbrennung aus dem Fuß abzuleiten und auch die Gelenkstelle von führendem und dichtendem Abschnitt mit Schmiermittel zu versorgen, ist an der Innenseite des führenden Abschnittes eine Leitfläche vorgesehen und diese so daran angebracht, daß ein gegen diese gespritztes Kühl- und/oder Schmiermittel um die Gelenkstelle am Fuß des Kolbens geführt wird. Zwar läßt sich ein solcher Kolbentrieb einerseits standfest und andererseits wärmedicht ausführen, indessen ist es bei höheren Beanspruchungen notwendig, weitere Maßnahmen zu treffen, um den Gelenkbolzen von Scher- und Biegebeanspruchungen weitgehend zu entlasten. Eine solche Entlasung des Gelenkbolzens von solchen Scher- und Biegebeanspruchungen ist auch deshalb erwünscht, um dem Gelenkbolzen Flächenpressungen, z. B. von 2 000 kg/cm² und mehr, zumuten zu können (vgl. DE-A-25 43 478).

Dieser letztgenannten Forderung Rechnung tragend, wird bei einem weiteren bekannten Kolben, welcher ebenfalls von einem führenden und einem dichtenden Abschnitt gebildet wird, der dichtende Abschnitt so gestaltet, daß neben der kegelförmigen Konfiguration seines Stützkörpers dieser Körper mit seinem Mantel so verläuft, daß dessen am Kolbenboden angeschlossene Basis im Bereich des Schwerkreises, das ist ein Kreis mit dem 0,7-fachen des Kolbendurchmessers, an diesem Boden angeschlossen bleibt. Durch diesen Anschluß der Basis am Kolbenboden wird versucht, den Kolbenboden an einer möglichen Durchbiegung zu hindern und die Kräfte aus dem Arbeitsgas ohne Biegemomente in den Gelenkbolzen einzuleiten. Diese Konstruktion, die sich in der Praxis außerordentlich gut bewährt hat, kann in manchen Fällen, und dies besonders bei hohen Belastungen des Kolbentriebes, zu Schwierigkeiten in der Abstützung des Gelenkbolzens am Pleuel führen. Bei den ständig wachsenden Anforderungen der Kolbentriebe, insbesondere hinsichtlich deren statischem Verhalten, mit Drucksteigungen bis 200 bar und gegebenenfalls darüber, wie auch Flächenbelastungen in der Größenordnung von 2 000 kg/cm² und mehr, kann es vorkommen, daß der Gelenkbolzen verformt wird, was Lagerschäden, Brüche im Gelenkbolzen und-/oder im fuhrenden Abschnitt hervorrufen kann (vgl. DE-A-27 17 028).

Der Erfindung liegt die Aufgabe zugrunde, einen Kolbentrieb für Hubkolben-Brennkraftmaschinen dahingehend weiterzubilden, daß dieser sowohl hohen thermischen Belastungen als auch hohen Drücken ohne Verformung des Stützkörpers, Gelenkbolzens und/oder Pleuels ausgesetzt werden kann, und der trotz dieser ernormen Anforderungen im Vergleich herkömmlicher, für gleiche Anforderungen konzipierte Kolbentriebe sowohl gewichtssparender als auch kostengünstiger ausgeführt werden kann.

Gemäß der Erfindung wird diese Aufgabe bei einem Kolbentrieb der eingangs genannten Art dadurch gelöst, daß im Längsmittelschnitt des Kolbentriebes gesehen, eine durch die Mitte der durch eine Symmetrieachse halbierten Auflager von Pleuel und Fuß des Kolbentriebes führende Linie über diese Auflager hinaus bis zum Boden des Kolbens geradlinig verlängert ist, und daß diese gerade Linie in deren Abschnitt vom Auflager des Kolbens bis zum Boden desselben von keiner Konturlinie des Kolbens geschnitten wird.

Durch diese Maßnahmen wird ein Kolbentrieb geschaffen, mit dem nicht nur die der Erfindung zugrundeliegende Aufgabe vorteilhaft gelöst, sondern darüberhinaus der Vorteil einer Reduzierung des Leistungsgewichtes gegenüber herkömmlichen Kolben erzielt wird. Dieser Vorteil ist mit zunehmendem Leistungsgewicht einer Brennkraftmaschine bei gleichzeitigem Anstieg, insbesondere auch der Spitzendrücke, insofern von Bedeutung, als z. B. auch bei kleineren Brennkraftmaschinen erhebliche Vorteile im Leistungsverbrauch gewonnen werden können. Hinzu kommt, daß mit einem erfindungsgemäßen Kolbentrieb die Leistungsgrenzen, die gegenwärtig mit Aluminium-Kolben bei etwa 35 KW/Liter für kleinere Brennkraftmaschinen (PKW) und 28 KW/Liter für größere Brennkraftmaschinen (LKW) erreicht werden, weiter angehoben werden können, was bei Aluminium-Kolben selbst mit Stahlarmetierung und Einbettung von Kühlkanälen u. a. m., kaum möglich ist. Selbst wenn eine solche Leistungsanhebung mit Aluminium-Kolben möglich gemacht werden soll, muß dies mit großen Nachteilen infolge Einleitens größerer Wärmemengen in den Kühlkreislauf (z. B. Ölkreislauf) der Brennkraftmaschine und teurer Armierung des Kolbens durch Stahleinlagen oder Eloxierens u. a. erkauft werden, was in den meisten Fällen nicht mehr in einem tragbaren Verhältnis zu Preis, Aufwand und Leistung steht.

Durch diese Konzeption des Kolbentriebes und der dadurch möglichen Vermeidung jeglicher Unterschneidung der Konturlinie dieses Teiles wird die Einleitung der Kräfte aus den Gasdrücken vom Kolbenboden zum Pleuel geradlinig bewirkt, und es werden die Materialien wie auch Teile des Kolbentriebes weitgehend gleichmäßig belastet, was zur Folge hat, daß partielle Überbelastungen dieser Teile weitgehend unterbunden werden. Dadurch lassen sich, insbesondere die den Kolben bildenden Abschnitte, annähernd völlig verkantungsfrei im Zylinder führen, was neben einer Reduzierung der Gleitreibung auch zu einer Reduzierung der Geräusche des Kolbentriebes führt.

Ein weiterer Vorteil des erfindungsgemäßen Kolbentriebes kann darin gesehen werden, daß durch die besondere Konzeption von führendem und dichtendem Abschnitt und der dadurch getroffenen Unterteilung der durch diese Abschnitte zu übernehmenden Funktionen die Abschnitte mit den für diese Funktionen jeweils günstigsten Werkstoffen hergestellt werden können. So kann beispielsweise Stahl oder Sphäroguß für den dichtenden Abschnitt und Aluminium oder Sintermetall für den führenden Abschnitt in Frage kommen. Die Werkstoffe, d. h. Stahl bzw. Späroguß oder Sintermetalle, haben außerdem den Vorteil, daß sie nur einen Bruchteil des teueren Aluminiums und besonders eines armierten Aluminium-Kolbens kosten. Durch die erfindungsgemäße Konzeption des Kolbentriebes wird selbst bei künftig hohen Leistungsanforderungen die Standfestigkeit des Kolbentriebes gewahrt, und es wird nicht notwendig sein, dem Leistungsanstieg dadurch zu begegnen, daß man in einen Aluminium-Kolben mehr und mehr Stahlteile integriert, wie das vielfach bei Kolben für insbesondere aufgeladene Brennkraftmaschinen der Fall ist.

Erst durch die klare Trennung der vom Kolbentrieb zu übernehmenden Funktionen und die konstruktive Auslegung desselben, mit dem dadurch sich ergebenden, geradlinigen Kräfteverlauf vom Kolbenboden zum Pleuel, werden neue Maßstäbe in der Kolben-Konstruktion gesetzt, die für hohe Leistungen und hohe Flächenpressungen der beanspruchten Kolbenteile maßgeblich werden. So konnte der im dichtenden Abschnitt vorgesehene Brennraum auf kleinsten Wärmeverlust, die Statik der Kolbentriebteile auf geringstmöglichen Verzug, der Dichtmantel und damit der Ringträger auf höchste Gasdichtheit und der führende Abschnitt auf geringste Reibung und geringstes Geräusch optimiert werden. Dabei hat es sich auch gezeigt, daß es für die Funktion des Kolbentriebes weitgehend unerheblich ist, welches Brennverfahren gewählt wird, d. h. ob ein Brennverfahren mit Einspritzung des Kraftstoffes in den Bereich der Schwerkreise der im Brennraum sich befindenden Luftschichten und damit ohne Berührung der Brennzone und Brennraumwand, oder ob ein Verfahren mit Auftragung des Kraftstoffes auf die Brennraumwand und Abschälung der daran verdampften Bestandteile verwendet wird, oder ob schlichtweg eine mittige, mehrstahlige Einspritzung mit radial auf die Brennraumwand gerichteten Kraftstoffstrahlen vorgehen wird, oder ob sogenannte Kammer- oder Wirbelkammerverfahren u. a. angewendet werden. Mit dem erfindungsgemäßen Kolbentrieb hat es sich ergeben, daß bei allen diesen Verfahren die vorgenannten Vorteile hinsichtlich Wärmedichtheit, Statik, Gasdichtheit und Gleitreibung erzielt werden können, wodurch mit einfachen Mitteln ein erheblicher Fortschritt erzielt wird.

Erst durch diese erfindungsgemäße Konzeption des Kolbentriebes wird es also möglich, auf eine neue Dimension hinsichtlich Gasdruck und Leistung des Kolbentriebes und somit auch der Brennkraftmaschine überzugehen. Das Verhältnis Mitteldruck (pm) zu Spitzendruck (pmax) beträgt beispielsweise bei kleineren Brennkraftmaschinen, wie sie bei PKW und ähnlichen Antrieben verwendet werden, etwa 1 : 12. Bei einem Epsilon, d. h. E, von etwa 20 und einem Mitteldruck von etwa 15 bar, wie er beispielsweise mit einem besonderen Brennverfahren mit Einspritzung des Kraftstoffes in den Bereich der Schwerkreise der Luftschichten erreicht wird, werden Gasdrücke, die auf den Kolbentrieb einwirken, von 180 bar gemessen ! Nimmt man dagegen das E zurück, so sind Abstriche am dieselmotorischen Prinzip die unausweichliche Folge, die nicht gern hingenommen werden. Nur bei großen Brennkraftmaschinen, wie z. B. solchen für Lastkraftwagen (LKW-Dieselmotoren), geht man auf ein E von weniger als 1 : 17 zurück und erhält damit ein pm/pmax von 1 : 10.

Gemäß einem weiteren Merkmal der Erfindung, bei dem die Engteile zwischen dem Kolbenboden und einer diesem Boden am nächsten benachbarten Ringnut für einen Dichtring liegt, wird das Neue darin gesehen, daß der Durchmesser des Kolbenbodens im Bereich dieser Engstelle größer ist, als der Durchmesser des die Dichtringe tragenden Ringträgers, und daß diese Engstelle durch deren geringe Materialanhäufung als eine den Wärmefluß vom Kolbenboden zum Ringträger unterbindende Drossel ausgebildet ist.

Durch diese Maßnahmen wird der Brennraum gegen die genannten hohen Gasdrücke abgedichtet und das Kolbenprinzip dahingehend abgeändert, daß der Kolbendichtmantel schon oberhalb des ersten Kolbenringes weitgehend gasdicht am Zylinder anliegt. Statt eines bisher Üblichen Dehnspaltes und Feuersteges wurde bei

dieser erfindungsgemäßen Konzeption des Kolbens die Gleitbahn des Kolbens über den oberen Dichtring gelegt.

Damit ist der kritische, erste Kolbenring statisch und thermisch weitgehend entlastet. Die Bedingung für einen gasdicht abgeschirmten Ölfilm an dieser Gleitbahn des Kolbens ist, daß ein Gleitlagerspiel bis zu 1,5/1 000 des Kolbendurchmessers nicht wesentlich überschritten wird. Gemäß dieser Forderung kann also keine relative Ausdehnung von Kolben und Zylinder mehr hingenommen werden, was bei der Anwendung von Eisen bzw. Sphäroguß statt Aluminium und der dadurch reduzierten Wärmeabströmung vom Brennraum zu dem Ringträger und von dort über die Kolbenringe in den Zylinder nicht zugelassen wird. Dazu trägt auch die Engstelle im Bereich des Kolbenbodens mit der dort vorgenommenen Wärmedrosselung bei, so daß die Kolbenringe von thermischen Belastungen aus dem Brenngas weitgehend entlastet werden.

Durch den Wegfall jeglicher Verformung des Gelenkbolzens ist auch eine sonst übliche Gleitlagerbüchse im Pleuellager überflüssig, so daß der Gelenkbolzen aufgrund seiner Oberflächenhärtung allein und ohne Zwischenschaltung einer solchen Büchse in den Lagerstellen aufliegt. Ein solcher Gelenkbolzen läuft also unmittelbar in den Lagerstellen und kann zum Zwecke dessen Oberflächenhärtung z. B. boriert sein.

Bei den hier erzielten und vom Kolbentrieb aufzunehmenden hohen Mittel- und Spitzendrücken wird verständlicherweise auch der führende Abschnitt mit doppelter Kraft an die Zylinderwand gepreßt. Mit dieser Aufgabe wird der führende Abschnitt besonders dann besser fertig, wenn er als sogenannter echter Gleitschuh konstruiert wird. In einem solchen Fall müssen ihm andere Eigenschaften zugebilligt werden, als sie bei üblichen Kolbenhemden oder bei Kolben mit Pendelschäften der Fall sind.

Untersuchungen mit einem erfindungemäßen Kolbentrieb haben ergeben, daß der führende Abschnitt wie auch der dichtende Abschnitt kaum Wärme an die Zylinderwand abführen. Um die Wärme aus der Verbrennung aus dem Bereich des Brennraumes abzuleiten, hat sich bisher eine Ölanspritzung gut bewährt, deren Spritzöl an einer Leitfläche des führenden Abschnitts entlang um das Lagerauge des Gelenkbolzens geführt wird. Auf dieser Weise wird sowohl für die Kühlung als auch Schmierung der Lagerstelle gesorgt, so daß eine Außenkühlung des Zylinders praktisch kaum noch von Bedeutung ist. Dies um so mehr, als die Wirksamkeit der Kühlung und Schmierung des Kolbentriebes in einfacher Weise durch die Gestaltung der Leitfläche und/oder die Menge des anzuspritzenden Schmier- und/oder Kühlmittels eingestellt werden kann. Diese Maßnahme hat es auch ermöglicht, von der üblichen Wasser- oder Luftkühlung auf eine Ölkühlung der Brennkraftmaschine überzugehen, die wiederum die Voraussetzung für den Wegfall der Zylinderkopfdichtung ist, denn gegen solche Gasdrücke ist es sicherlich nicht sinnvoll, mit einer üblichen Zylinderkopfdichtung, wie sie heute bei einer Vielzahl von Brennkraftmaschinen verwendet wird, anzutreten.

Wenn auch die Konzeption des Kolbentriebes, wie oben ausgeführt, weitgehend von der Art des Brennverfahrens unabhängig ist, so können die Vorteile des Kolbentriebes besonders dann voll ausgeschöpft werden, wenn ein Brennverfahren eingesetzt wird, bei dem der Kraftstoff in den Bereich der Schwerkreise der im Brennraum drehenden Luftschichten eingespritzt wird. Bei einem solchen Brennverfahren wird bekanntlich ein Kontakt der Brennzone zur Brennraumwand dadurch vermieden, daß an der Brennraumwand ein ebenfalls dort rotierender Luftmantel aufrecht erhalten bleibt, und dieser Luftmantel dann der Verbrennung zugeführt wird, wenn die innerhalb des Schwerkreises der Luftschichten sich befindende Luftmasse von der Brennzone bereits erfaßt wurde.

Weitere vorteilhafte Weiterbildungen der Erfindung lassen sich den verbleibenden abhängigen Patentansprüche entnehmen.

In den Zeichnungen sind einige der möglichen Ausführungsbeispiele des Kolbentriebes schematisch dargestellt. Es zeigt :

Figur 1 Einen erfindungsgemaßen Kolbentrieb mit dessen an einem Kurbelwellenzapfen angelenkten Pleuel, teilweise in Ansicht und teilweise im Längsmittelschnitt,

Figur 2 einen Längsmittelschnitt durch den Kolbentrieb gem. Fig. 1 um 90° geschwenkt,

Figur 3 einen Längsmittelschnitt durch den führenden und dichtenden Abschnitt des Kolbentriebes mit dem Pleuel im Bereich dessen Anlenkung an diesen Abschnitten für ein Verbrennungsverfahren mit Einspritzung des Kraftstoffes im Bereich der Schwerkreise der einzelnen Luftschichten,

Figur 4 einen Längsmittelschnitt durch einen führenden und dichtenden Abschnitt in einer gegenüber Fig. 3 um 90 Grad geschwenkten Darstellung für ein Brennverfahren mit Auftragung des Kraftstoffes auf die Brennraumwand,

Figur 5 einen Längsmittelschnitt durch den führenden und dichtenden Abschnitt für einen Kolbentrieb mit einem außerhalb des dichtenden Abschnittes angeordneten Brennraum (Vorkammer),

Figur 6 einen Längsmittelschnitt durch einen führenden und dichtenden Abschnitt mit einem im dichtenden Abschnitt asymmetrisch angeordneten Brennraum und Einspritzung des Kraftstoffes über eine radial auf die Brennraumwände gerichtete, mehrstrahlige Einspritzdüse,

Figur 7 einen Schnitt durch den Kolbentrieb in der Ebene VII-VII in Fig. 2,

Figur 8 eine Draufsicht auf einen führenden Abschnitt, der im Gegensatz zu den vorbeschriebenen Darstellungen nicht ringförmig sondern I-förmig ausgeführt ist, und linksseitig im Schnitt und rechtsseitig in Ansicht,

Figur 9 eine Seitenansicht auf Fig. 8,

Figur 10 einen Querschnitt durch einen führenden, I-förmigen Abschnitt mit einer zum Bolzenlager gerichteten Leitfläche,

Figur 11 eine Seitenansicht auf den führenden Abschnitt gem. Fig. 10, teilweise in Schnitt und Ansicht,

Figur 12 einen Schnitt durch einen, insbesondere aus Blechen zusammengesetzten I-förmigen Abschnitt in der Schnittebene XII-XII in Fig. 13,

Figur 13 eine Draufsicht auf den führenden Abschnitt gem. Fig. 12,

Figur 14 ein Diagramm, auf dem die Belastbarkeit herkömmlicher Kolbentriebe in bezug auf spezifische Leistung zu Kolbendurchmesser im Vergleich zum erfindungsgemäßen Kolbentrieb aufgetragen sind,

Figur 15 ein Diagramm, auf dem das Kolbengewicht herkömmlicher Kolbentriebe in bezug auf Kolbendurchmesser und -leistung im Vergleich zum erfindungsgemäßen Kolbentrieb aufgetragen sind und

Figur 16 ein Diagramm, auf dem die Belastbarkeit herkömmlicher Kolbentriebe in bezug auf den erfindungsgemäßen Kolbentrieb aufgetragen sind.

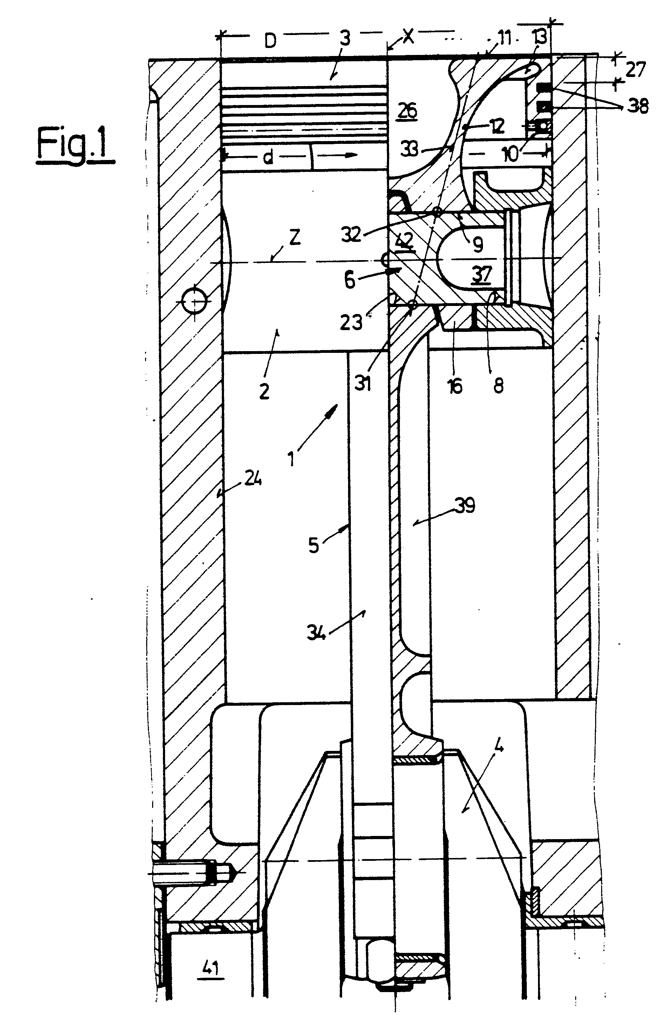

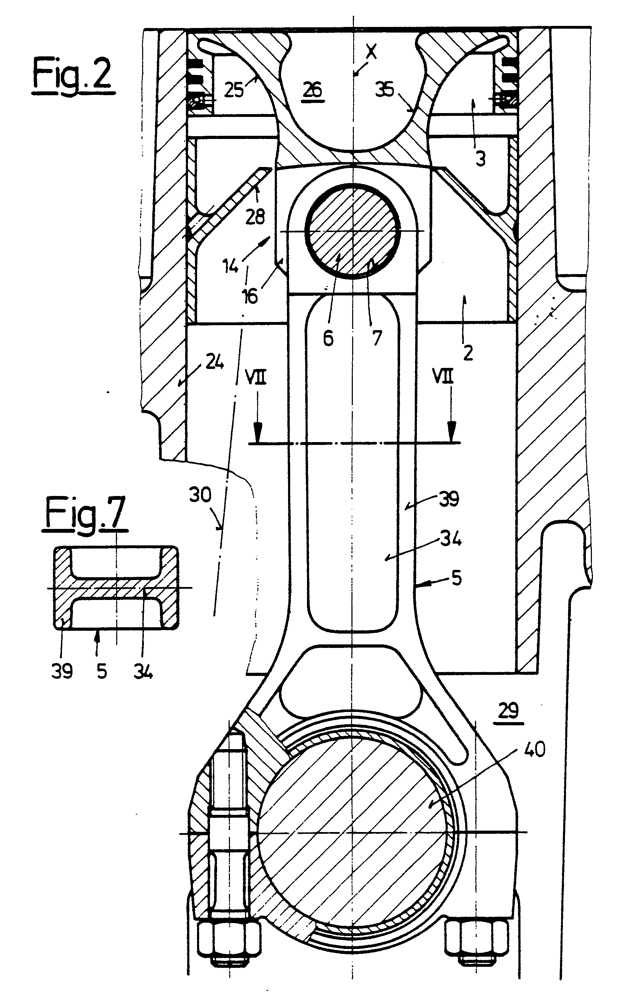

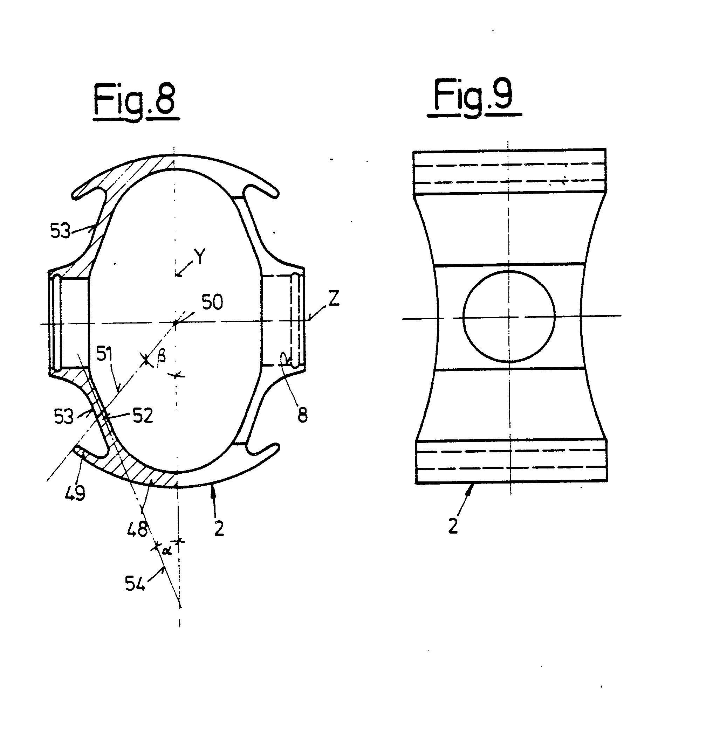

Der Kolbentrieb 1 gemäß der Erfindung wird im wesentlichen von einem führenden Abschnitt 2 und einem dichtenden Abschnitt 3 sowie einem diese Abschnitte gegen eine in der Zeichnung nur angedeutete Kurbelwelle 4 stützenden Pleuel 5 gebildet. Führender Abschnitt 2 und dichtender Abschnitt 3 sind über einen gemeinsamen Gelenkbolzen 6 mit dem Pleuel 5 gelenkig verbunden, und es ist das Pleuel für diesen gelenkigen Anschluß mit einem Lagerauge 7 ausgestattet. Der Gelenkbolzen 6 ist durch dieses Lagerauge 7 und durch die Lagerstellen 8, 9 am führenden und dichtenden Abschnitt 2, 3 geführt. Der dichtende Abschnitt 3, der bei dieser Ausführung als ein sogenannter Ringträger 10 ausgeführt ist, weist einen den Kolbenboden 11 stützenden Stützkörper 12 auf, welcher im Bereich des Kolbenbodens über eine Engstelle 13, die im Bereich des Kolbenbodens liegt, zum einen an dem Ringträger 10 und zum andern über einen Kolbenfuß 14 an zwei symmetrisch zur Längsmittelachse X des Kolbentriebes 1 angeordneten Gabelarmen 15, 16 dieses Kolbenfußes 14 ausläuft. Die Gabelarme 15, 16 des Kolbenfußes 14 sind mit Lageraugen 17 versehen, und es sind diese Lageraugen mit Lagerstellen 18, 19 für den Gelenkbolzen 6 ausgestattet. Der führende Abschnitt 2, der gemäß der hier dargestellten Ausführung entweder als eine ringförmige Büchse oder als ein I-förmiger Arm ausgeführt sein kann, weist eine Querbohrung 20 auf, und es ist diese Querbohrung mit Lagerstellen 21, 22 für den Gelenkbolzen 6 versehen. Analog dem führenden und dichtenden Abschnitt 2, 3 weist auch das Pleuel 5 das Lagerauge 7 für den Gelenkbolzen 6 auf, wobei dieses Lagerauge Lagerstellen 23 für den Gelenkbolzen beinhaltet. Das Lagerauge 7 am Pleuel 5 ist zudem V-förmig gestaltet und weist symmetrisch zur Längsmittelachse X unterschiedlich breite Auflageflächen auf. Das Lagerauge 7 am Pleuel 6 weist insbesondere in seinem Längsmittelschnitt V-förmige Konfiguration auf, wobei die Basis dieses V am verlängerten Schaft des Pleuels 5 liegt und die Spitze desselben am Kolbenfuß 14 zugewandt ist. Analog dieser V-förmigen Konfiguration des Pleuellagers 7 sind auch die Gabelarme 15, 16 am Kolbenfuß des dichtenden Abschnittes 3 der Konfiguration des Lagerauges 7 angepaßt, so daß die dem Lagerauge benachbarten Wandflächen der Gabelarme mit geringem Spiel parallel zu den Wandflächen des Pleuellagers 7 verlaufen. Die radial zur Zylinderwand 24 weisenden Flächen der Gabelarme 15, 16 können vorzugsweise parallel zur Zylinderwand verlaufen, um auf diese Weise eine einfacher zu definierende Lagerstelle 21, 22 am führenden Abschnitt 2 zu gewährleisten. Der dichtende Abschnitt 3, der den kegelförmigen Stützkörper 12 aufweist, kann so ausgeführt sein, daß er innerhalb seiner Mantelflächen 25 einen symmetrisch zur Längsmittelachse X oder asymmetrisch zu dieser angeordneten Brennraum 26 aufnimmt. Dabei kann ein solcher Brennraum 26 entweder die in den Figuren 1-4 und 6 dargestellte Konfiguration oder auch eine andere Konfiguration aufweisen. Im Bereich des Kolbenbodens 11 weist der Stützkörper 12 eine größere Stützbreite auf, und er ist dort mit dem Kolbenboden untrennbar verbunden, wobei zum Zwecke einer elastischen Anlenkung des Ringträgers 10 am Stützkörper 12 und Kolbenboden 11 der Außenmantel 25 dieses Stützkörpers in eine weite Krümmung auslaufen kann, die soweit geführt ist, daß diese in die Engstelle 13 im Bereich des Kolbenbodens 11 zwischen Kolbenboden und Ringträger 10 auslaufen kann. Diese Engstelle 13 kann dort so vorgesehen sein, daß die Wandstärke zum Kolbenboden 11 hin zur Wandstärke zum Dichtmantel, d. h. zur Gleitbahn 27 des Ringträgers 10 hin sich wie etwa 1 : 1,5 verhalten. Dabei ist diese Engstelle 13 auch in den Materialabschnitt des Ringträgers 10 hineingeschnitten, so daß der zur Gleitbahn 27 des Ringträgers verbleibende Wandabschnitt dünner als der die Dichtringe 38 tragende Wandabschnitt ist. Der führende Abschnitt 2, der gemäß gewählter Ausführungen nach Fig. 1-6 als Ringbüchse oder gem. Fig. 8-13 als I-förmiger Arm ausgeführt sein kann, kann an seiner Innenwand mit mindestens einer Leitfläche 28 ausgestattet sein, und es kann diese Leitfläche so gebogen sein und bis an die Anlenkstelle des Gelenkbolzens 6 herangeführt sein, daß ein gegen diese Leitfläche aus dem Kurbelraum 29 gespritztes Kühl- und-/oder Schmiermittel 30 um den Gelenkbolzen gelenkt wird. Auf diese Weise kann die aus dem Brennraum 26 in den Fuß 14 des Stützkörpers 12 überfließende Wärme aus der Verbrennung des Kraftstoff-Luftgemisches aus dem Gelenkbolzen 6 bzw. aus dem Fuß dieses Stützkörpers abgeführt und in das Kühlöl abgeleitet werden, ohne daß diese Wärme über den Gelenkbolzen und den führenden Abschnitt 2 in den Zylinder 24 der Brennkraftmaschine gelangt. Analog dieser Wärmeabführung, und der somit weitgehend einzigen Wärmeableitung aus dem Brennraum 26, ist der Kolbenboden 11 gegen den Ringträger 10 über die Engstelle 13 so wärmedicht abgeschottet, daß kaum eine Wärme über diese Engstelle in den Ringträger und dort insbesondere in die Gleitbahn 27 desselben zwischen dem Kolbenboden 11 und dem ersten Dichtring 38 einfließt. Auf diese Weise werden der Ringträger 10 und damit auch dessen Dichtringe 38 von Temperaturspannungen und Belastungen durch den Gasdruck weitgehend entlastet, so daß dieser Ringträger mit dieser Gleitbahn an der Zylinderwand bzw. am Zylinder 24 anliegen kann. Zu diesem Zweck ist der Durchmesser des Kolbens im Bereich dieser Gleitbahn 27 mit einem sehr geringen Lagerspiel von maximal 1,5/1 000 des Durchmessers D des Kolbenbodens 11 bemessen, und es ist der darunterliegende Abschnitt des Ringträgers 10 mit einem geringeren Durchmesser d versehen, so daß dieser Abschnitt nur über die Dicht- bzw. Kolbenringe am Zylinder 24 abgestützt bleibt, und somit der Ringträger unterhalb dessen Gleitbahn 27 nicht mehr am Zylinder 24 anliegt. Die Lagerstellen 18, 19 für den Gelenkbolzen 6 am Kolbenfuß 14 des dichtenden Abschnittes 3 wie auch die Lagerstellen 21, 22 am führenden Abschnitt 2 und die Lagerstellen 23 am Pleuel 5 sind so dimensioniert, daß eine durch die Mitten 31, 32 der symmetrisch zur Längsmittelachse X liegenden Lagerstellen 23 und 18, 19 führende Linie 33 geradlinig von der Lagerstelle 23 am Schaft 34 des Pleuels 5 über die Lagerstelle 18, 19 am Kolbenfuß 14 zum Kolbenboden 11 . verläuft, und es ist dabei diese Linie so gerichtet, daß sie von keiner Konturlinie des Kolbens auf ihrer Lange vom Kolbenfuß 14 zum Kolbenboden 11 geschnitten wird. Analog dieser Führung der Linie 33 ist diese auch so angeordnet, daß insbesondere bei einem symmetrisch um die Längsmittelachse X angeordneten Brennraum 26 im dichtenden Abschnitt 3 diese Linie auch von der Innenwand 35 des Brennraumes wie auch von der Mantelfläche 25 des Stützkörpers 12 in deren verlängertem Abschnitt vom Kolbenfuß 14 zum Kolbenboden 11 nicht geschnitten wird. Um diese Linie 33 und damit auch den Kraftfluß vom Kolbenboden 11 zum Pleue 5 nicht zu beeinträchtigen, kann ein mit Ausnehmungen 36, 37 symmetrisch zur Längsmittelachse X versehener Gelenkbolzen 6 dessen Ausnehmungen so beinhalten, daß der ausgenommene Innenmantel derselben diese Linie 33 ebenfalls nicht schneidet. In den Darstellungen des Kolbentriebes 1 gemäß den Figuren 1, 3 und 5 hat der Gelenkbolzen 6 zum einen zwei V-förmige Ausnehmungen 36 symmetrisch zur Längsmittelachse X und zum andern zwei U-förmige Ausnehmungen 37, ebenfalls symmetrisch zur Längsmittelachse, die ausweislich dieser Figuren diese Linie 33 nicht schneiden, sondern mit deren Innenmantel kurz vor dieser haltmachen. Bei einem Gelenkbolzen 6 ohne Ausnehmungen 36 oder 37 ist die Frage des Schneidens der Linie 33 unerheblich, es ist aber für die Erfindung zweckmäßiger, von Gelenkbolzen 6 mit den vorgenannten Ausnehmungen 36 oder 37 auszugehen, um dem Gelenkbolzen eine gewisse Elastizität zuzubilligen. Die Lagerstellen 21, 22 an dem führenden Abschnitt 2 für den Gelenkbolzen 6 sollten mit deren symmetrisch zur Längsmittelachse X angeordneten Mitten vorteilhafterweise noch innerhalb des Schwerkreises S des Kolbenbodens 11 liegen, wobei unter Schwerkreis ein Kreis verstanden wird, der den 0,7-fachen des Kolbenbodendurchmessers etwa entspricht. Eine solche Anordnung der Lagerstellen 21, 22 für den Gelenkbolzen 6 am führenden Abschnitt 2 gewährleistet eine optimale Abstützung desselben im führenden Abschnitt, so daß auch hier eine sonst übliche Durchbiegung des Gelenkbolzens, wie dies beispielsweise bei Außenlagerung desselben in einem solchen führenden Abschnitt der Fall wäre, unterbleibt. Der Schaft 34 des Pleuels 5 kann doppel-T-förmig ausgeführt sein, wie dies im Querschnitt desselben in Fig. 7 dargestellt ist. Durch diese Ausbildung des Pleuels 5 werden die Kräfte aus dem dichtenden und führenden Abschnitt 3, 2 entlang der T-förmigen Stege 39 am Rand des Pleuels geführt, und es werden diese Kräfte über diese Stege in einen Zapfen 40 der Kurbelwelle 41 eingeleitet.

Eine vorteilhafte Dimensionierung des Gelenkbolzens 6 kann darin bestehen, daß dessen Länge etwa dem Kreis des Schwerkreises S entspricht. Sollte der Gelenkbolzen 6 auch die Ausnehmungen 36 oder 37 aufweisen, so sollten diese eine solche Tiefe haben, daß sie sich etwa 3 : 4 zum mittleren Abschnitt 42, der zwischen diesen Ausnehmungen liegt, verhalten.

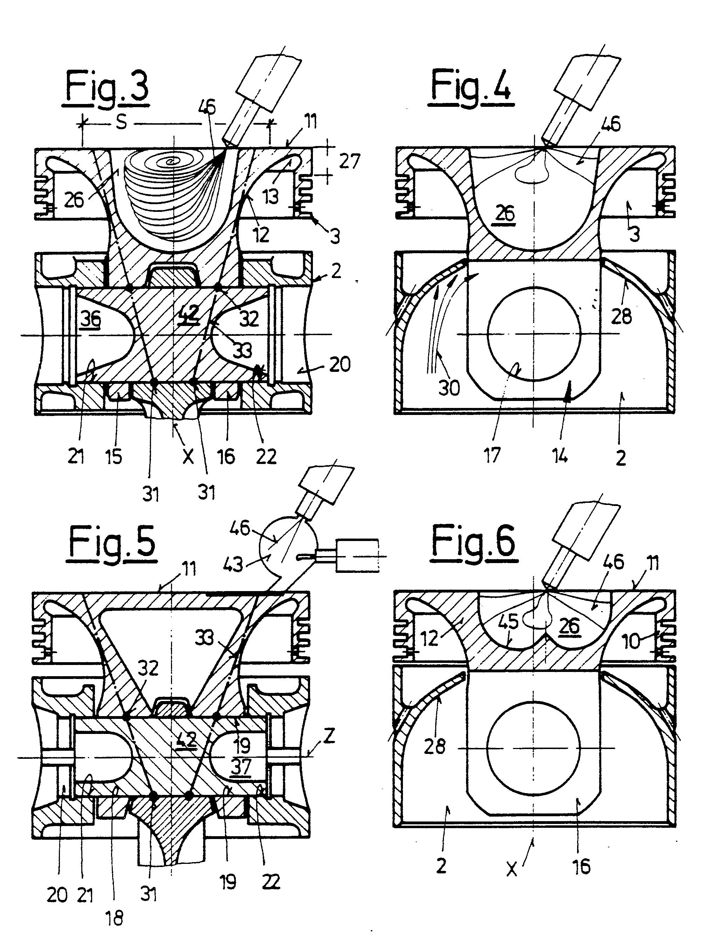

Die erfindungsgemäße technische Lehre der Erfindung, daß die Linie 33 von keiner Konturlinie des Kolbentriebes geschnitten wird, gilt für alle Kolbentriebe 1, unabhängig der angewendeten Brennverfahren und Anordnung von Brennräumen 26 gleichermaßen. So können die Brennräume 26 die Gestalt gemäß den Fig. 1-4 mit konzentrisch zur Längsmittelachse X verlaufenden Brennraumwänden 35 haben, oder es kann der Kolbentrieb 1 für einen Brennraum 43 außerhalb des dichtenden Abschnittes 3 konzipiert sein. Im letzteren Fall ist der Kolbenboden 11 geschlossen auszuführen, wie dies in Fig. 5 angedeutet ist. Auch kann ein im dichtenden Abschnitt 3 vorgesehener Brennraum 45 die in Fig. 6 dargestellte doppelring-förmige Form aufweisen, in den der Kraftstoff 46 radial aus der Mitte gegen die Wände 45 gespritzt wird. In der Darstellung gem. Fig. 6 ist der Brennraum 45 asymmetrisch zur Längsmittelachse X angeordnet, wobei auch hier die Einbettung des Brennraumes so getroffen ist, daß die Linie 33 von keiner Konturlinie, insbesondere des dichtenden Abschnittes 3, geschnitten wird. Die für die Einspritzung des Kraftstoffes 46 verwendeten Düsen können als Einstrahl- oder Mehrstrahldüsen, wie an sich bekannt, ausgeführt sein.

Bei der Ausführung des führenden Abschnittes 2 gem. Fig. 8-13 ist dieser I-förmig ausgeführt und vorzugsweise als ein Eisenlegierungsteil ausgeführt, um in Anpassung der Wärmebelastung und Wärmeleitfähigkeit des dichtenden Abschnittes 3 auch dieses Teil diesen Belastungen folgsam zu machen. Entsprechend der üblichen, gem. Fig. 1-6 zylindrischen Ausführung dieses Abschnittes 2, kann auch bei der I-förmigen Ausführung desselben dieses mit einer Leitfläche 28 versehen sein, die bei dieser Ausführung gegebenenfalls im Abschnitt 2 elastisch oder starr angebracht sein kann.

Die den Zylinder 24 zu führenden Gleitflächen dieses Abschnittes 2 können dabei entweder hammerförmig oder segmentförmig ausgeführt sein. Die vorteilhaftere und von der Fertigung her wohl einfachere Form eines solchen Abschnittes 2 dürfte wohl die segmentförmige sein, wobei deren Segmentbögen 48 so weit ausladend gestaltet sein können, daß eine vom Rand 49 zur Mitte 50 des Abschnittes 2 führende Gerade 51 einen Winkel β mit der Längsmittelachse Y einschließt, der größer als ein Winkel α ausgeführt ist, der eine durch eine Verstrebung 52 am Mantel 53 dieses Abschnittes 2 führende Gerade 54 mit dieser Längsmittelachse Y einschließt.

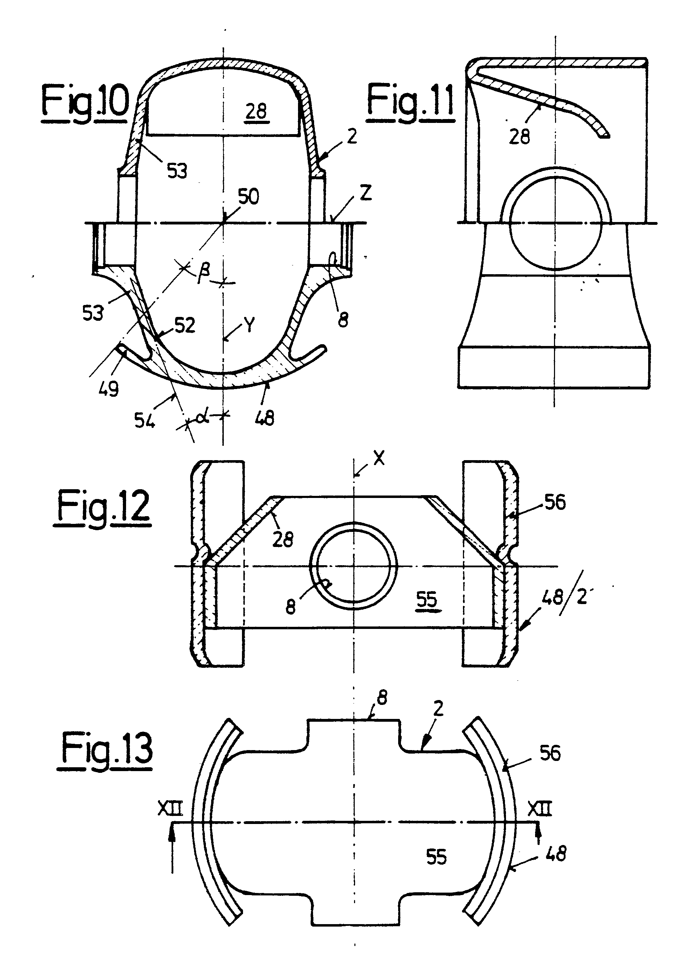

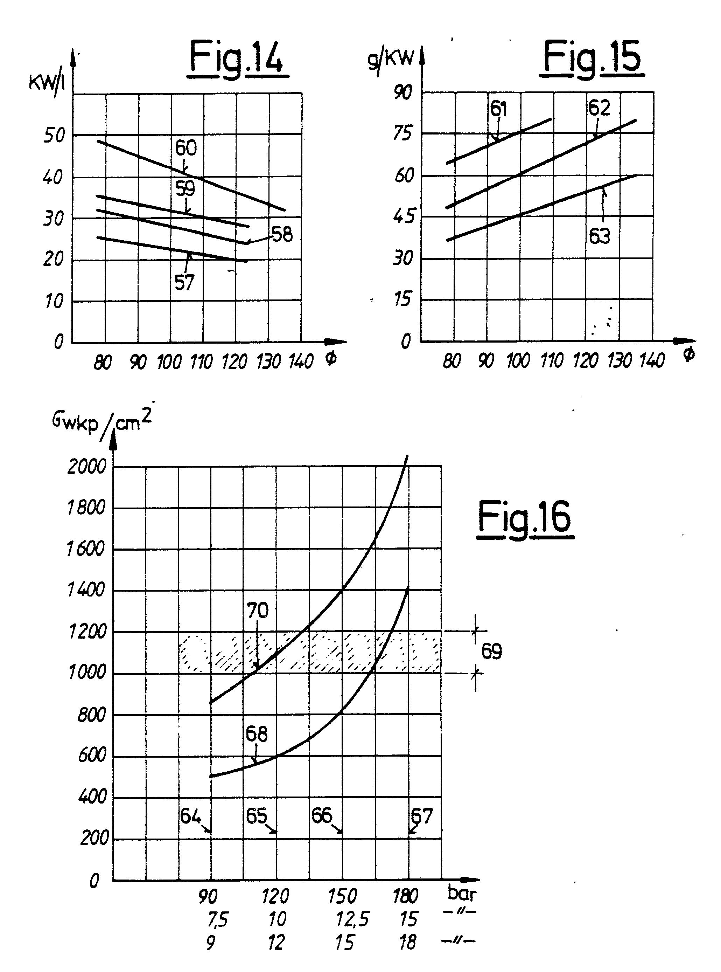

In der Darstellung des führenden Abschnittes 2 gem. Fig. 10 ist dieser halbseitig hammerförmig und halbseitig segmentförmig ausgeführt. Bei der hammerförmigen Ausführung (obere Bildhälfte) ist dieser Abschnitt 2 auch mit einer Leitfläche 28 ausgestattet, die analog anderer Ausführungen bis an die Lagerung 8 des Gelenkbolzens 6 herangeführt sein kann. Der führende Abschnitt 2 gem. den Fig. 12 und 13 unterscheidet sich von der segmentförmigen Ausführung nur dadurch, daß er aus Blechteilen 55, 56 geformt ist, von denen das eine Blechteil 55 die Leitfläche 28 nebst Lagerstellen 8 für den Gelenkbolzen 6 und das andere Blechteil 56 den Segmentbogen 48 bildet.

Aus den Diagrammen gem. Fig. 14-16 ergibt sich ferner die aus der Erfindung resultierende Folgerung, daß in Fällen, in denen der Hubraum einer Brennkraftmaschine nicht erhöht und das E dieser Brennkraftmaschine nicht reduziert werden soll, es notwendig wird, auf diesen neuen Kolbentrieb 1 gemäß der Erfindung mit einer neuen Dimension für Gasdruck und Kolbenleistung überzuwechseln.

Im Diagramm gem. Fig. 14 sind auf der senkrechten Koordinaten die Leistung in Kilowatt (KW) pro Liter (1) Hubraum und auf der waagerechten Koordinaten der Durchmesser (φ) des Kolbens in mm aufgetragen. Die unterste Linie 57 in diesem Diagramm gibt die Werte, die bei einem entsprechenden Kolbendurchmesser mit einem Aluminium-Kolben an Leistung erreicht werden können, wenn die Brennkraftmaschine bzw. der Dieselmotor als Saugmaschine konzipiert ist, wieder. Die darüber liegende Linie 58 gilt in analoger Weise für einen Aluminium-Kolben, der durch ein Spritzmittel gekühlt und der für aufgeladene Brennkraftmaschinen konzipiert ist. Ebenso gilt die noch weiter darüber liegende Linie 59 für einen Aluminium-Kolben mit Kühlkanal für eine ebenfalls aufgeladene Brennkraftmaschine. Die Linie 60 schließlich gibt die Werte an, die mit einem erfindungsgemäßen Kolbentrieb 1, ebenfalls bei einer aufgeladenen Brennkraftmaschine, erzielt werden, wieder. Aus diesem Diagramm wird leicht ersichtlich, daß bei einer Brennkraftmaschine und hier insbesondere bei einem aufgeladenen Dieselmotor, eine erheblich bessere spezifische Leistung erzielt werden kann, wenn der erfindungsgemäße Kolbentrieb 1 eingesetzt wird. Diese mit dem erfindungsgemäßen Kolbentrieb 1 gewonnene, spezifische Leistung von beispielsweise 47 KW/L bei einem Kolbentrieb für kleinere Brennkraftmaschinen (Dieselmotoren für PKW) und 37 KW/L bei einem Kolbentrieb 1 für größere Brennkraftmaschinen (Dieselmotoren für LKW) wird mit keinem bekannten Kolbentrieb aus Aluminium auch nur annähernd erreicht. Die wärmedämmenden Eigenschaften und die höhere Standfestigkeit des erfindungsgemäßen Kolbentriebes 1 zeichnen diesen für solche enormen Anforderungen besonders aus.

Im Diagramm gem. Fig. 15 ist das Gewicht der Kolbentriebe 1 in bezug auf Leistung und Größe derselben aufgetragen. Das Gewicht, bezogen auf Gramm (g) pro Kilowatt (KW) ist auf der senkrechten und der Kolbendurchmesser ($\phi$) in mm auf der waagerechten Koordinaten aufgetragen. Während hier die Linie 61 für Kolbentriebe 1 aus Aluminium bei Saugmaschinen gilt, gilt die Linie 62 für Kolbentriebe von aufgeladenen Brennkraftmaschinen, wobei auch bei diesen der jeweilige Kolbentrieb aus Aluminium hergestellt ist. Die darunter liegende Linie 63 schließlich gilt für Kolbentriebe 1 gemäß der Erfindung, wie sie auch bei aufgeladenen Brennkraftmaschinen eingesetzt werden können. Auch hier wird leicht erkennbar, daß das Leistunggewicht des Kolbentriebes 1 gemäß der Erfindung erheblich günstiger ist, als das Leistungsgewicht der vorgenannten Kolbentriebe aus Aluminium, die weder wärmedämmend noch dynamisch so hoch belastbar sind.

Die Belastbarkeit vorbekannter Kolbentriebe 1 und solcher gemäß der Erfindung ist aus dem Diagramm nach Fig. 16 ersichtlich. An der senkrechten Koordinate ist die Lagerbelastung am Gelenkbolzen 6 über 6 wkp/cm² (Festigkeit in Kilopont pro Quadratzentimeter) bis zu einem Druck von 2 000 kp/cm² aufgetragen, wo hingegen auf der waagerechten Koordinaten der Spitzendruck von 90-180 bar, die Mitteldrücke für PKW-Dieselmotoren zwischen 7,5 und 15 bar und die Mitteldrücke für LKW-Dieselmotoren zwischen 9 und 18 bar angegeben sind. Dabei gibt die Linie 64 den Wert bzw. die Lagerbelastung für eine Saugmaschine, die Linie 65 die Lagerbelastung für einen Vorkammer-Diesel mit Aufladung, die Linie 66 die Lagerbelastung für einen Dieselmotor mit Direkteinspritzung und Aufladung und die Linie 67 für einen Hochleistungsdiesel gemäß der erfinderischen Konzeption am Beispiel eines Kolbentriebes 1 für LKW-Motoren mit einem E von 17 wieder. Bei Kurve 68, die für LKW-Motoren gilt, wird auch erkennbar, daß die Grenze 69 der Belastbarkeit des Kolbentriebes 1 aus Aluminium nebst dessen Lagerbüchse spätestens bei 1 200 kp/cm² erreicht ist, hingegen der Kolbentrieb 1 gemäß der Erfindung, der nicht einmal eine Lagerbüchse braucht, bis 1 400 kp/cm² und darüber belastet werden kann, ohne daß hierfür das E zurückgenommen werden müßte, und dies bei einem Spitzendruck von 180 bar !

Analog der Kurve 68 für LKW-Motoren verläuft auch die Kurve 70 für PKW-Motoren, wobei dem Kolbentrieb 1 gemäß der Erfindung im Vergleich zu den Aluminium-Kolben praktisch keine Grenzen gesetzt sind, zumal dessen Belastbarkeit bis 2 000 kp/cm², und dies bei einem E von 20, reicht.

Ergänzend zu den Ausführungen gemäß den Darstellungen des führenden Abschnittes 2 mit der an ihm angebrachten, mindestens einen Leitfläche 28 ist es denkbar, eine solche Leitfläche am Fuß 14 des dichtenden Abschnittes anzubringen und diese so groß zu gestalten, daß sie vom Bereich der Lagerstelle 8 des Gelenkbolzens 6 bis etwa zum Innenmantel des führenden Abschnittes 2 reicht. Diese Möglichkeit bzw. Variante kann Vorteile in der Herstellung des Kolbentriebes 1 bringen, besonders dann, wenn der führende Abschnitt 2 durch Sinterung eines Metallpulvers hergestellt wird.

Ebenfalls ergänzend zu den Ausführungen des Gelenkbolzens 6 haben Untersuchungen ergeben, daß neben der bereits definierten Länge dieses Bolzens dessen Durchmesser dann optimal ist, wenn er etwa der Breite der Auflagerfläche 23 des Pleuels 5 im Bereich dessen Schaftes im Verhältnis von etwa 1 : 1 entspricht.

Was ferner die Gleitbahn 27 anbelangt, so haben ebenfalls Untersuchungen ergeben, daß es genügt, wenn deren vom ersten Dichtring 38 zum Kolbenboden 11 sich verjüngender Abschnitt bei Brennkraftmaschinen ohne Außenkühlung im Bereich von 0,5/1 000 des Kolbendurchmessers (Zylinderdurchmesser) in Höhe des ersten Dichtringes liegt ; bei ölgekühlten Zylindern 24 dagegen dieses Maß bei gleicher Höhe etwa 1/1 000 und bei Brennkraftmaschinen mit wassergekühlten Zylindern 24, ebenfalls in gleicher Höhe bis zu 2/1 000 des Kolbendurchmessers beträgt.

**Patentansprüche**

1. Kolbentrieb (1) für Hubkolben-Brennkraftmaschinen, wie Dieselmotoren u. a., bestehend aus einem in einem Zylinder axial verschiebbaren Kolben und einem diesen Kolben mit einem Kurbeltrieb (4) verbindenden Pleuel (5), wobei der Kolben von einem dichtenden (3) und einem führenden (2) Abschnitt gebildet und diese Abschnitte zwischen sich ein freies axiales Spiel zueinander aufweisen sowie über einen Gelenkbolzen (6) gelenkig miteinander verbunden sind, und von denen der dichtende Abschnitt (3) von einem konzentrisch um eine Längsmittelachse des Kolbentriebs angeordneten und den Boden (11) des Kolbens mit dessen Fuß (14) verbindenden wie auch vom Fuß zum Boden sich radial ausweitenden Stützkörper (12) gebildet wird, und dieser Stützkörper mit dem Boden in einen Dichtringe (38) tragenden Ringträger (10) über eine dort vorliegende Engstelle (13) ausläuft, sowie der dichtende Abschnitt wie auch der führende Abschnitt nebst Pleuel symmetrisch zur Längsmittelachse Auflager (8, 9) für die gegenseitige Abstützung derselben über den Gelenkbolzen (6) aufweisen, dadurch gekennzeichnet, daß im Längsmittelschnitt des Kolbentriebes (1) gesehen, eine durch die Mitte (31, 32) der durch eine Symmetrieachse (X) halbierten Auflager von Pleuel und Fuß des Kolbentriebes führende Linie (33) über diese Auflager hinaus bis zum Boden (11) des Kolbens geradlinig verlängert ist, und daß diese gerade Linie in deren Abschnitt vom Auflager (32) des Kolbens bis zum Boden (11) desselben von keiner Konturlinie des Kolbens geschnitten wird.

2. Kolbentrieb nach Anspruch 1, dadurch gekennzeichnet, daß der Gelenkbolzen (6) konzentrisch zu dessen Längsmittelachse (Z) und symmetrisch zur Längsmittelachse (X) des Kolbentriebes (1) je eine Ausnehmung (36 oder 37) aufweist, und daß die Konturlinie des Innenmantels jeder Ausnehmung die Linie (33) nicht schneidet.

3. Kolbentrieb nach Anspruch 1, dadurch gekennzeichnet, daß bei einem im dichtenden Abschnitt angeordneten Brennraum die Kontur der Innenwand (35) dieses Brennraumes (26) die Linie (33) nicht schneidet.

4. Kolbentrieb nach den Ansprüchen 1 und 2, dadurch gekennzeichnet, daß bei im führenden Abschnitt symmetrisch zur Längsmittelachse des Kolbentriebes angeordneten Auflager für den Gelenkbolzen mindestens die Mitte dieser Auflager (21, 22) innerhalb eines Schwerkreises (S = 0,7 des Kolbendurchmessers) des Kolbens (1) liegt.

5. Kolbentrieb nach Anspruch 4, dadurch gekennzeichnet, daß der Gelenkbolzen (6), insbesondere durch Borieren oberflächengehärtet ist, und daß der Durchmesser dieses Gelenkbolzens zur Breite der Auflagefläche (23) des Pleuels (5) für diesen Gelenkbolzen im Verhältnis von etwa 1 : 1 liegt, wie auch diese Auflagefläche am Pleuel zu den Auflageflächen (18, 19) am Fuß (14) des Kolbens (1) für den gleichen Gelenkbolzen sich ebenfalls im Verhältnis dieser Größenordnung zueinander verhalten.

6. Kolbentrieb nach Anspruch 4, dadurch gekennzeichnet, daß die Länge des Gelenkbolzens (6) dem Durchmesser des Schwerkreises (S) in etwa entspricht.

7. Kolbentrieb nach Anspruch 1, dadurch gekennzeichnet, daß die Engstelle (13) unterschiedliche Wandstärken zwischen sich und dem Kolbenboden (11), wie auch zwischen sich und dem Ringträger (10) aufweist, und daß deren Wandstärke zum Kolbenboden hin gegenüber deren Wandstärke zum Ringträger hin sich mindestens wie etwa 1 : 1,5 verhält.

8. Kolbentrieb nach Anspruch 7, dadurch gekennzeichnet, daß bei einer zwischen dem Kolbenboden und einer diesem Boden am nächsten benachbarten Ringnut für einen Dichtring liegenden Engstelle der Durchmesser (D) des Kolbens im Bereich des Kolbenbodens (11) größer als der Durchmesser (d) des die Dichtringe (38) tragenden Ringträgers (10) ist, und daß diese Engstelle (13) durch deren geringe Materialanhäufung als eine den Wärmefluß vom Kolbenboden zum Ringträger unterbindende Wärme-Drossel ausgebildet ist, und daß bei Brennkraftmaschinen ohne Außenkühlung an den Zylindern die Gleitbahn (27) über dem oberen Dichtring (38) im Bereich von 0,5/1 000, bei Brennkraftmaschinen mit ölgekühlten Zylindern (24) im Bereich von 1/1 000 und bei Brennkraftmaschinen mit wassergekühlten Zylindern (24) im Bereich bis zu 2/1 000 des Kolbendurchmessers (D) beträgt.

9. Kolbentrieb nach Anspruch 8, dadurch gekennzeichnet, daß zwischen der ersten Ringnut (38) am Ringträger (10) und dem Kolbenboden (11) eine Gleitbahn (27) vorgesehen ist, und daß diese Gleitbahn auf ihrer Länge von der ersten Ringnut zum Kolbenboden stetig sich verjüngend ausgeführt ist, und diese Verjüngung maximal 1,5/1 000 des Durchmessers (D) des Kolbens (1) beträgt.

10. Kolbentrieb nach Anspruch 4, dadurch gekennzeichnet, daß bei einer für ein zu leitendes Kühl- und/oder Schmiermittel vorgesehenen Leitfläche diese Leitfläche (28) annähernd stoßfrei aus dem Bereich des führenden Abschnittes (2) an den Fuß (14) des Kolbens (1) herangeführt ist.

11. Kolbentrieb nach Anspruch 5, dadurch gekennzeichnet, daß der Gelenkbolzen (6) ohne Zwischenschaltung einer Lagerbüchse direkt auf dessen Auflagern abgestützt ist.

## Claims

1. A piston drive (1) for reciprocating piston internal combustion engines, such as diesel engines or the like, consisting of a piston reciprocating within a cylinder and a connecting rod (5) connecting said piston with a crank (4), said piston being made up of a sealing portion (3) and a guiding portion (2), the two being spaced apart, the sealing and the guiding portion being pivot-mounted on a pin (6), and the sealing portion (3) comprising a supporting portion (12) which bells out from the base (14) of the piston to its top (11) and which connects the top and the base coaxially about the longitudinal centre axis of the piston drive and which, via a thinned section (13), extends into an annular portion (10) carrying the sealing rings (38), the sealing and the guiding portions as well as the connecting rod having, symmetrically about the longitudinal centre axis, support surfaces (8, 9) for their mutual support on the pivot pin (6), the characteristic feature of such support surfaces being that a line (33), which is shown on the longitudinal centre section of the piston, leads through the centres (31, 32) of the connecting rod and piston base support surfaces which are divided into halves by an axis of symmetry (X) and extends straight beyond said support surfaces up to the piston top and that said straight line does not intersect any piston surface contour line between the support surface (32) of the piston and the piston top (11).

2. A piston drive as claimed in Claim 1, wherein the pivot pin (6) has, concentrically about its longitudinal centre axis (Z) and symmetrically about the longitudinal centre axis (X) of the piston drive (1), a recess on both sides (36 or 37) and wherein said line (33) does not intersect the recess contour lines.

3. A piston drive as claimed in Claim 1, wherein said sealing portion has a combustion chamber and said line (33) does not intersect the surface line of the internal wall (35) of said combustion chamber (26).

4. A piston drive as claimed in Claims 1 and 2, wherein at least the centres (21, 22) of the support surfaces for the pivot pin of the guiding portion, which are symmetrically arranged about the piston longitudinal section centre line, are located within a centroid circle (S = 0.7 times the piston diameter) of the piston (1).

5. A piston drive as claimed in Claim 4, wherein the surface of the pivot pin (6) is hardened, preferably using boron, and wherein the ratio of the diameter of said pivot pin to the width of the support surface (23) of the connecting rod (5) bearing on said pivot pin is approximately 1 : 1, and likewise the ratio of the width of said connecting rod support surface to the width of the support surfaces (18, 19) bearing on said pivot pin at the piston (1) base (14) is approximately the same.

6. A piston drive as claimed in Claim 4, wherein the length of the pivot pin (6) is approximately equal to the diameter of the centroid circle (S).

7. A piston drive as claimed in Claim 1, wherein the thickness of the wall between the thinned section (13) and the top (11) of the piston differs from the thickness of the wall between the thinned section and the annular portion (10) carrying the sealing rings, and wherein the ratio of the former to the latter is approximately 1 : 1.5.

8. A piston drive as claimed in Claim 7, wherein at the thinned section located between the piston top and the adjacent groove for a sealing ring the piston diameter (D) is larger at the top (11) of the piston than the diameter (d) of the annular portion (10) carrying the sealing rings (38) and wherein said thinned section (13) constitutes a heat barrier between the top of the piston and the annular portion because of the small amount of material, and wherein, with respect to the piston diameter (D), the sliding surface (27) above the upper sealing ring (38) is in the range of 0.5/1 000 in the case of internal combustion engines without external cylinder cooling, 1/1 000 in the case of internal combustion engines with oil-cooled cylinders (24) and at most 2/1 000 in the case of internal combustion engines with with water-cooled cylinders (24).

9. A piston drive as claimed in Claim 8, wherein a sliding portion (27) is provided between the first annular groove (38) in the annular portion (10) and the top (11) of the piston and wherein said sliding portion decreases constantly in diameter over its length between the first annular groove and the top of the piston and said decrease amounts to a maximum of 1.5/1 000 of the diameter (D) of the piston (1).

10. A piston drive as claimed in Claim 4, wherein in the case of a guiding face being provided for guiding a cooling and/or lubricating medium said guiding face (28) is faired from the guiding portion (2) to the base (14) of the piston (1).

11. A piston drive as claimed in Claim 5, wherein the pivot pin (6) is not provided with a bearing bush and bears directly on the support surfaces.

**Revendications**

1. Commande à piston (1) pour moteurs à combustion interne à pistons alternatifs, tels que moteurs Diesel et autres, comportant un piston se mouvant axialement dans un cylindre et une bielle (5) reliant ce piston à une commande à bielle (4), le piston étant composé d'une partie assurant l'étanchéité (3) et d'une partie de guidage (2) qui présentent entre elles un jeu axial libre et qui sont reliées entre elles par un axe d'articulation (6), la partie assurant l'étanchéité (3) étant formée par un corps de support (12) disposé concentriquement autour d'un axe longitudinal médian de la commande à piston et reliant le fond (11) du piston à son pied (14) tout en s'élargissant vers le fond, ce corps de support avec le fond se terminant en une couronne (10) recevant les segments (38) en passant par un amincissement circulaire (13) de la couronne et du fond, la partie assurant l'étanchéité de même que la partie de guidage et la bielle présentant, symétriquement à l'axe longitudinal médian, des surfaces d'appui supportant les trois éléments entre eux à l'aide de l'axe d'articulation (6), les surfaces d'appui étant caractérisées par le fait qu'au plan de l'axe longitudinal médian de la commande à piston (1) une ligne (33) reliant les centres (31, 32) des surfaces d'appui de la bielle et du pied de la commande à piston divisées en deux par un axe de symétrie (X) et qui se prolonge tout droit au-delà des surfaces d'appui jusqu'au fond (11) du piston n'est coupée par aucune ligne de contour du piston dans la section délimitée par la surface d'appui (32) du piston et son fond (11).

2. Commande à piston selon la revendication 1, caractérisée par le fait que l'axe d'articulation (6) présente, concentriquement à son axe longitudinal médian (Z) et symétriquement à l'axe longitudinal médian (X) de la commande à piston des évidements (36 ou 37) et que la ligne de contour de la paroi interne des deux évidements ne coupe pas la ligne (33).

3. Commande à piston selon la revendication 1, caractérisée par le fait que le contour de la paroi interne (35) d'une chambre de combustion (26) disposée dans la partie assurant l'étanchéité ne coupe pas la ligne (33).

4. Commande à piston selon les revendications 1 et 2, caractérisée par le fait qu'au moins le centre des surfaces d'appui (21, 22) supportant l'axe d'articulation et disposées dans la partie de guidage symétriquement de part et d'autre de l'axe longitudinal médian de la commande à piston est situé à l'intérieur d'un cercle S de diamètre 0, 7 du diamètre du piston (1).

5. Commande à piston selon la revendication 4, caractérisée par le fait que la surface de l'axe d'articulation (6) est trempée, de préférence par traitement au bore, et qu'il y a un rapport d'environ 1 : 1 entre le diamètre de cet axe d'articulation et la largeur de la surface d'appui (23) de la bielle (5) recevant cet axe d'articulation et qu'il y a un rapport similaire entre la surface d'appui de la bielle et les surfaces d'appui (18, 19) du pied (14) du piston (1) recevant ce même axe d'articulation.

6. Commande à piston selon la revendication 4, caractérisée par le fait que la longueur de l'axe d'articulation (6) est à peu près identique au diamètre du cercle (S).

7. Commande à piston selon la revendication 1, caractérisée par le fait que l'épaisseur de la paroi délimitée par l'amincissement (13) et le fond (11) du piston est différente de celle de la paroi délimitée par l'amincissement et la couronne (10) recevant les segments et que l'épaisseur de la paroi au fond du piston et l'épaisseur de la paroi de la couronne recevant les segments présentent entre elles un rapport d'au moins 1 : 1,5.

8. Commande à piston selon la revendication 7, caractérisée par le fait qu'à l'endroit d'un amincissement situé entre le fond du piston et une rainure circulaire destinée à recevoir un segment et qui est la rainure la plus proche du fond, le diamètre (D) du piston dans le plan du fond (11) du piston est plus grand que le diamètre (d) de la couronne (10) recevant les segments d'étanchéité (38) et que, grâce à l'économie de matériau, cet amincissement (13) constitue une barrière thermique bloquant le passage de la chaleur du fond du piston vers la couronne et que la face de frottement (27) au-dessus du segment supérieur (38) est de l'ordre de 0,5/1 000 du diamètre du piston (D) pour les moteurs à combustion interne sans refroidissement externe des cylindres de l'ordre de 1/1 000 pour les moteurs à combustion interne à refroidissement à l'huile des cylindres (24) et de l'ordre de 2/1 000 au maximum pour les moteurs à combustion interne à refroidissement à l'eau des cylindres (24).

9. Commande à piston selon la revendication 8, caractérisée par le fait qu'il est prévu une face de frottement (27) entre la première rainure de segment (38) de la couronne (10) recevant les segments et le fond (11) du piston et que cette face de frottement va en s'amincissant progressivement à partir de la première rainure de segment jusqu'au fond du piston et que cet amincissement est de 1,5/1 000 du diamètre (D) du piston (1) au maximum.

10. Commande à piston selon la revendication 4, caractérisée par le fait qu'une face de guidage (28) destinée à guider un moyen de refroidissement et/ou de lubrification est disposée de manière à assurer un passage continu de la partie de guidage (2) vers le pied (14) du piston (1).

11. Commande à piston selon la revendication 5, caractérisée par le fait que l'axe d'articulation (6) repose directement sur les surfaces d'appui, sans l'intermédiaire d'un coussinet.

Fig.1

Fig.2

Fig.7

Fig.3

Fig.4

Fig.5

Fig.6

0 106 935

# Fig.8

# Fig.9

53

Y

50

Z

51

β

53

52

8

49

48

α

54

2

2

Fig.10

28

53

2

50

Z

β

53

52

Y

49

8

54

α

48

Fig.11

28

Fig.12

X

28

56

8

55

48/2

Fig.13

8

2

56

XII

XII

55

48

Fig.14

Fig.15

Fig.16